# EUROPEAN PATENT SPECIFICATION

(11) **EP 1 273 252 B1**
(45) Date of publication and mention of the grant of the patent: **14.02.2007**
(21) Application number: 02013121.5
(22) Date of filing: 14.06.2002
(51) Int. Cl.: A47J 43/046, A47J 36/06, A47J 42/56

(54) **Boiling kettle with safety lid**
Kochtopf mit Sicherheitsdeckel
Récipient de cuisson avec un couvercle de sécurité

(30) Priority: 04.07.2001 IT PN20010022 U
(43) Date of publication of application: 08.01.2003
(73) Proprietor: ELECTROLUX PROFESSIONAL S.p.A., 33170 Pordenone (IT)
(72) Inventor: Fadelli, Marino, 31014 Colle Umberto, Treviso (IT); Moro, Mauro, 33170 Pordenone (IT)
(74) Representative: Giugni, Valter

(56) References cited:
- FR-A- 2 646 074
- US-A- 4 173 925
- US-A- 5 890 804

## Description

The present invention refers to a boiling kettle for cooking foods by boiling them in a cooking liquid or, anyway, for cooking foods that, owing to their own particular nature, do not require being boiled in any cooking liquid, actually, since they are inherently in a fluid or semi-fluid state of their own, such as for instance purée, sauces and the like, and that in all cases require being mixed during the cooking process.

Known in the art there are boiling kettles, in particular for application in commercial or community foodservice operations, which are adapted to cook such kinds of food as specified above and, to that purpose, are provided with a stirring arrangement for mixing the food being cooked, in particular such an arrangement comprising a rotor that moves with an essentially circular, i.e. rotary motion about an axis that coincides with the axis of the same kettle.

These kettles are usually provided with a mechanism that enables them to be tilted about a horizontal axis in order to allow for the food to be poured off the kettle into an appropriate external container that may be resting on the floor or on suitable carts; such a mechanism may be actuated manually, e.g. by means of a suitable handwheel, or with the use of well-known electromechanical systems.

The afore cited stirring arrangement normally operates during cooking, but quite often it also operates during kettle emptying phases in order to promote food outflow.

Kettles of this kind, however, have certain drawbacks as far as operator safety is concerned: in fact, the presence of said moving stirrer arrangement, in particular if the latter happens to rotate at the highest rotating speed thereof that may reach up to as many as approx. 200 rpm, may clearly turn up as a plain danger situation for the hands of the operator, especially after the kettle has been tilted and the lid thereof has been lifted off or, anyway, opened, since in such a circumstance the blades or vanes of the stirrer become freely accessible from the outside, while the operator must necessarily work in close vicinity of the kettle and the operating parts thereof.

Furthermore, both before and during cooking the need may arise for some additional cooking or food ingredients to be introduced into the kettle, when such a stirring arrangement is already operating, i.e. rotating, so that, with the kettle still standing in its upright position, the operator may well reach with his/her hands into the interior of the kettle, not too deeply thereinto, really, but anyway deeply enough for exposing his/her hands to the risk of being accidentally hit and injured by the rotating blades of said stirring arrangement.

In view of minimizing such drawbacks, a solution has been disclosed in WO 8703185 which calls for the provision of a particular lid closing hinge adapted to enable the kid to be lifted by just a narrow gap or slit in view of being able to gain access into the kettle itself. Such a solution, however, only partially does away with the afore described safety problems and, in all cases, requires the lid to be provided with a hinge that is particularly complex and expensive.

From US 4,173,925, which is considered to represent the closest prior art, and US 5,890,804 a large pot is shown, having two lids, which are coupled each other and also to the top opening of the pot. The lower lid is a perforated mesh, while the upper lid is the hermetical closure cover of the pot. Said two lids can be raised and opened independently; however, the operation of their raising has been proved to be hard-tiring , due to the pot size and therefore to the consequent and not negligible weight of said lids; moreover, the same operation may also become dangerous, due to the high lids temperature, caused by the boiling water contained in the pot.

The need therefore arises, and is generally felt, actually, for a cooking kettle to be provided, which is effective in fully preventing said stirring arrangement from being capable of being reached, even fortuitously or by mere accident, when it is still operating, while on the other hand enabling both the interior of the kettle to be inspected, and new food or cooking ingredient to be possibly added during cooking, and the kettle to be conveniently emptied upon tilting.

Furthermore, such a kettle shall be capable of being implemented and manufactured in an easy and simple manner, without any excessive additional burden in terms of costs, and shall anyway allow for all of the traditional operations connected therewith, such as for instance a thorough cleaning of the kettle after the stirrer has safely come to a standstill, a due maintenance of the stirrer itself, the normal closing and opening of the lid, and so on, to be carried out as usual.

These aims, along with further features of the present invention, are reached in a cooking kettle provided with a particular additional lid that is made and works in the manner as recited and defined in the appended claims.

The present invention may be implemented in a preferred, although not sole embodiment that is described in greater detail and illustrated below by way of non-limiting example with reference to the accompanying drawings, in which:
- Figure 1 is a perspective, partially assembled view of a kettle and a lid according to the present invention;
- Figure 2 is a perspective view of a kettle according to the present invention, in a different embodiment thereof;

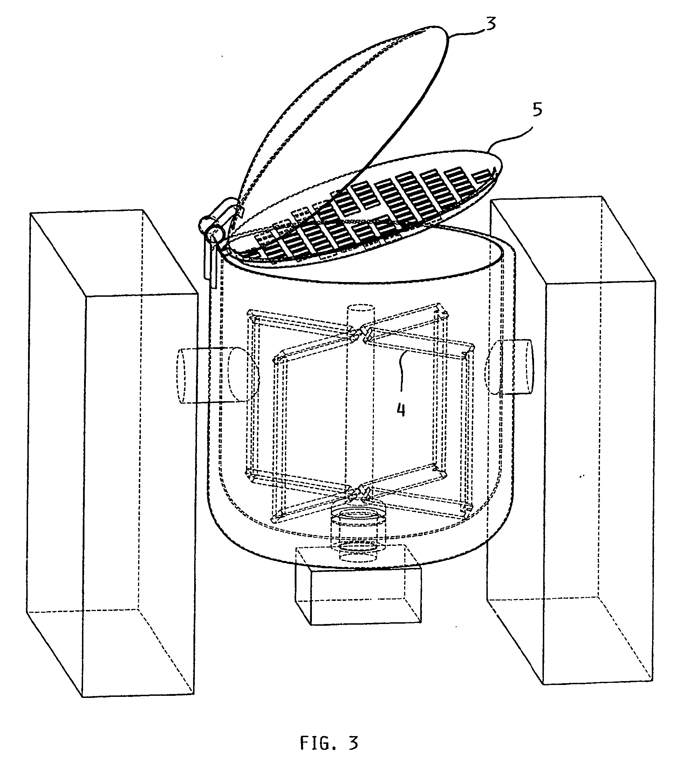

- Figure 3 is the same view as in Figure 2, however with some internal component parts illustrated as a see-through view;

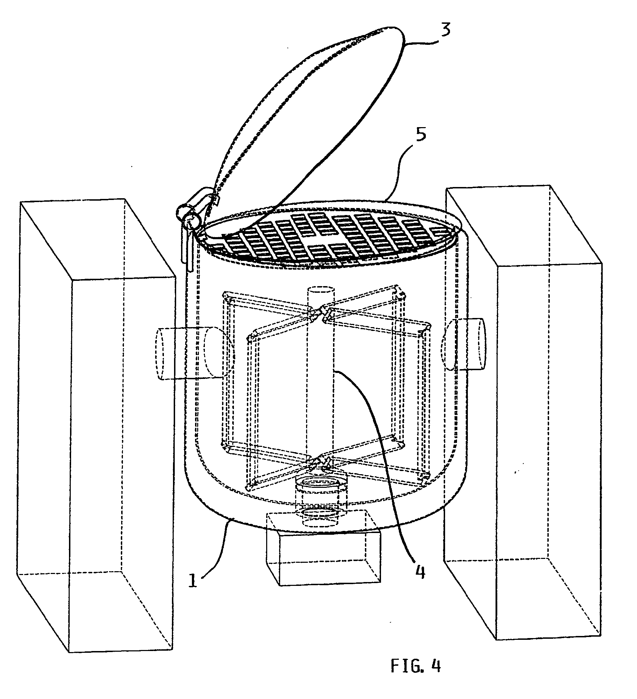

- Figure 4 is a view of the same kettle as the one illustrated in Figure 3, however with the lid of the invention illustrated in the closed position thereof;
- Figure 5 is a vertical side view of the kettle illustrated in Figure 2;
- Figure 6 is an enlarged view of the portion comprising the hinges shown in Figure 2.

The kettle 1 is provided laterally with support and tilting blocks 2 and a closing lid 3, all of which are largely known in the art. In addition, in the interior of the kettle there is provided a stirring device 4, which may take a number of different forms and work in a number of different manners that do not affect the present invention and are of no interest as far as the latter is concerned, actually, but share in all cases the fact that they anyway involve a plurality of surfaces, vanes or blades that move according to different motion patterns within the volume of the kettle in order to stir, mix and, under the circumstances, even comminute the food being cooked in the kettle.

With reference to the Figures, and since the actual purpose of the present invention is to prevent in a selective manner said stirring device 5 to be capable of being accidentally or unintentionally reached with the hands as it is working, i.e. rotating, the kettle 1 is provided with a second lid 5, which is adapted to be arranged between said closing lid 3 and the upper rim 6 of said kettle, in which said second lid 5 is provided with a plurality of through-apertures 7 so that, when said second lid 5 is applied on to the opening 8 of said kettle, it practically becomes and performs as a barrier against the accidental introduction of items, and in particular the hands and the wrists of the operator, down to the level at which they would be hit by or get in contact with the moving members of said stirring device.

On the other hand, the presence of said through-apertures in said second lid allows for additional food or cooking ingredients to be possibly introduced in the kettle during the cooking process, and when such a stirring device is operating, by simply pouring said food or cooking ingredients, which will have been cut or processed to an appropriately small size, onto said second lid from which they can be shuffled or shifted about with a simple implement, such as for instance a spoon, until all of the food or cooking ingredients so poured thereonto will eventually reach a through-aperture and fall into the kettle.

Said second lid must of course be made in such a manner as to be capable of being left in its closed position on the kettle in certain conditions of operation thereof, but also in such a manner as to be capable of being removed and re-applied at any time, i.e. whenever this appears to be appropriate, through a simple and safe handling procedures. To such a purpose, the afore described embodiment of the present invention may be advantageously improved through and integrated with a number of further improvements and variants.

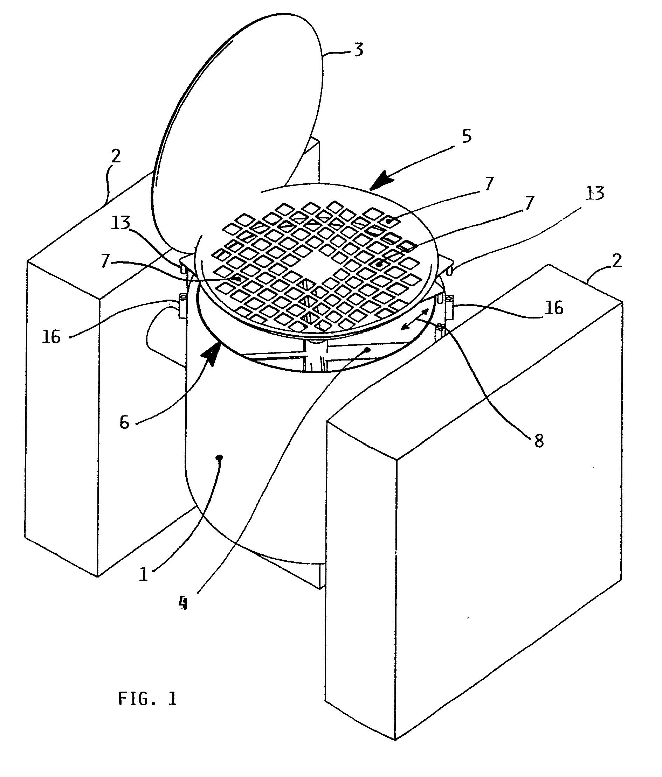

A first such improvement consists in practically avoiding to have to simply remove said second lid manually from the kettle, so as this is illustrated symbolically in Figure 1, while providing appropriate means with the help of which said second lid can be removed from said opening 8 of the kettle, but remains rotatably engaged therewith, preferably at the upper rim 6 thereof, by means of an appropriate hinge 10.

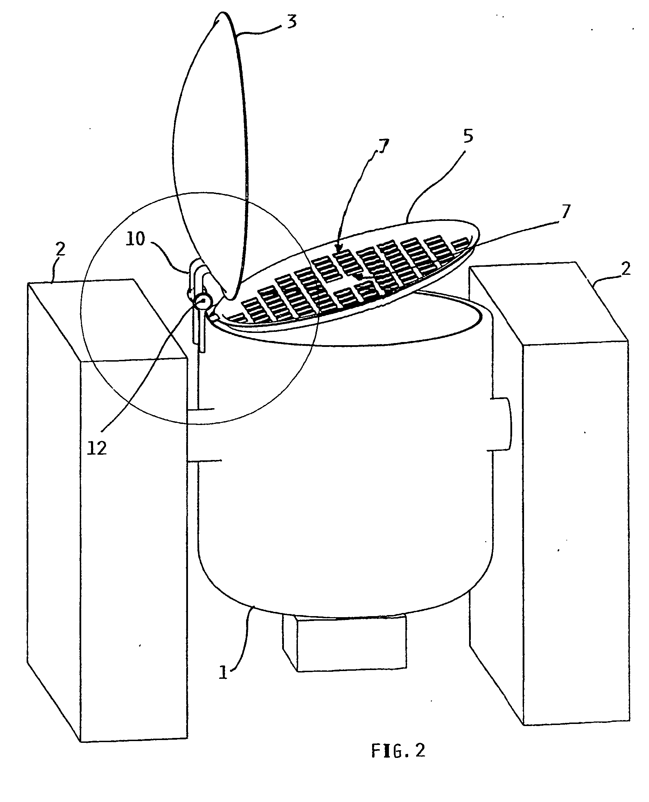

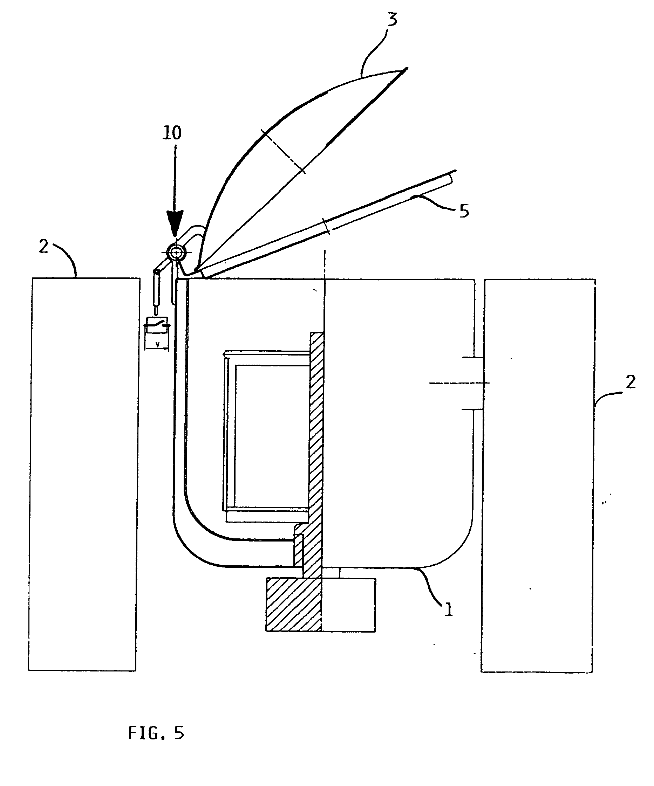

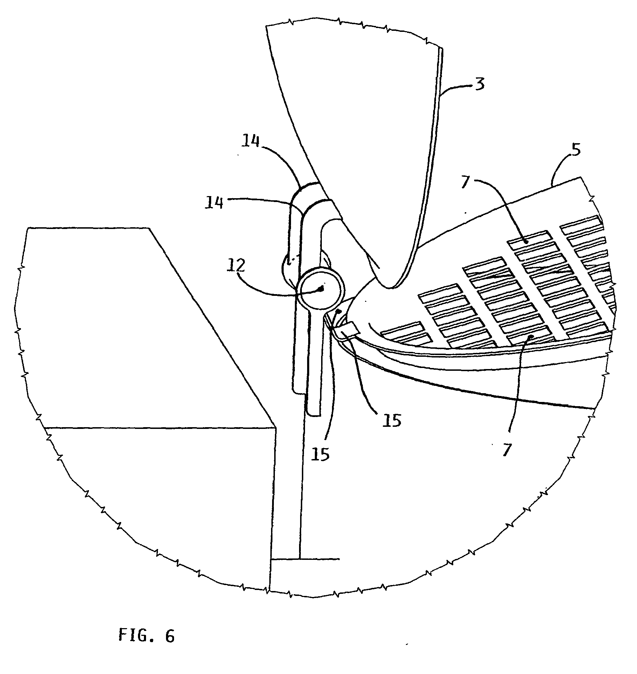

A second improvement consists in letting said hinge 10 coincide with the position of the hinge of the top or closing lid 3 of the kettle; more than that, both said hinges are arranged so as to share the same turning pin 12, so that the arms 14 and 15 of said closing lid and said second lid, respectively, are applied on to said single and same hinging pin, as this is best shown in Figures 2, 5 and 6.

A third improvement lies in the fact that said second lid, when placed in its closing position onto the opening of the kettle, is adapted to actuate appropriate safety means detecting said closed state of said lid.

Said safety means may well be implemented through the use of such sensors or detectors as largely known in the art, in particular microswitches 16 appropriately arranged on the outside of the kettle and capable of being actuated by suitable actuating members 13 that are rigidly connected to said second lid, as this is illustrated symbolically in Figure 1; these safety means are advantageously capable of being further connected to control means (not shown) that are adapted to cut off, i.e. stop the operation of said stirring device 4 in the kettle upon said safety means being correspondingly actuated by said actuating members 13.

In practice, this allows a safety function to be obtained, according to which said stirring device can be stopped automatically when said second lid is opened, and can then be restarted automatically when said second lid is put back in place, i.e. closed again.

## Claims

1. Boiling kettle (1) for cooking such foods as mixable foods or foods suspended in a cooking liquor, comprising:
- a lid (3) for closing the top aperture (8) of said kettle,
- a mechanism (2) for supporting and tilting said kettle either by manual or servo-assisted or power actuation,
- a stirring device (4) for mixing the food being cooked in the kettle,
- a second lid (5), which is adapted to close said top aperture (8) of the kettle and is itself further provided with a plurality of through apertures, said second lid being arranged between said closing lid (3) and the inner volume of said kettle, and being selectively removable from said top aperture of the kettle,
**characterized in that** said top closing lid (3) is connected to a portion of the upper rim (6) of said kettle through a respective hinge, and that said second lid is provided with a respective second hinge (10) attached to said same portion.

2. Boiling kettle according to claim 1, **characterized in that** the hinging pin (12) is common and the arms (14, 15) of said top closing lid and said second lid, respectively, are applied on to said common hinging pin (12).

3. Boiling kettle according to claim 2, **characterized in that** said top closing lid (3) is capable of being selectively opened in an independent manner, and that said second lid (5) is adapted to remain in its closed state on the kettle.

4. Boiling kettle according to any of the preceding claims, **characterized in that** it is provided with safety means (13, 16) that are adapted to cut off the operation of said stirring device (4) when said second lid (5) is removed from the top aperture of said kettle.

## Patentansprüche

1. Kochtopf (1) zum Kochen von Nahrungsmitteln, wie beispielsweise mischbaren Nahrungsmitteln oder Nahrungsmitteln, die in einer Kochflüssigkeit suspendiert sind, umfassend:
- einen Deckel (3) zum Schließen der oberen Öffnung (8) des Topfes,
- einen Mechanismus (2) zum Halten und Neigen des Topfes durch manuelle oder mechanisch unterstützte oder elektrische Betätigung,
- eine Rührvorrichtung (4) zum Mischen der im Topf gekochten Nahrungsmittel,
- einen zweiten Deckel (5), der geeignet ist, die obere Öffnung (8) des Topfes abzuschließen und seinerseits mit einer Mehrzahl von durchgehenden Öffnungen versehen ist,
wobei der zweite Deckel zwischen dem Schließdeckel (3) und dem Innenraum des Topfes angeordnet ist und selektiv von der oberen Öffnung des Topfes entfernt werden kann,
**dadurch gekennzeichnet, dass** der obere Schließdeckel (3) durch ein entsprechendes Gelenk mit einem Teil des oberen Randes (6) des Topfes verbunden ist und dass der zweite Deckel mit einem entsprechenden zweiten Gelenk (10) versehen ist, das an dem selben Teil befestigt ist.

2. Kochtopf nach Anspruch 1, **dadurch gekennzeichnet, dass** der Gelenkstift (12) gemeinsam benützt wird und die Arme (14, 15) des oberen Schließdeckels bzw. des zweiten Deckels am selben gemeinsam benützten Gelenkstift (12) angebracht sind.

3. Kochtopf nach Anspruch 2, **dadurch gekennzeichnet, dass** der obere Schließdeckel (3) selektiv auf unabhängige Weise geöffnet werden kann und dass der zweite Deckel (5) in seiner geschlossenen Stellung auf dem Kochtopf bleiben kann.

4. Kochtopf nach einem der vorangehenden Ansprüche, **dadurch gekennzeichnet, dass** er mit Sicherheitsmitteln (13, 16) ausgestattet ist, die geeignet sind, den Betrieb der Rührvorrichtung (4) zu unterbrechen, wenn der zweite Deckel (5) von der oberen Öffnung des Topfes entfernt wird.

## Revendications

1. Récipient de cuisson (1) pour cuire des aliments tels que des aliments à mélanger ou des aliments en suspension dans un liquide de cuisson, comprenant :
- un couvercle (3) pour fermer l'ouverture supérieure (8) dudit récipient de cuisson,
- un mécanisme (2) pour soutenir et incliner ledit récipient de cuisson par une action manuelle ou asservie ou électrique,
- un dispositif d'agitation (4) pour mélanger les aliments en cours de cuisson dans le récipient de cuisson,
- un deuxième couvercle (5) qui est adapté pour fermer ladite ouverture supérieure (8) du récipient de cuisson et est lui-même muni de plus d'une pluralité d'ouvertures,
ledit deuxième couvercle étant agencé entre ledit couvercle de fermeture (3) et le volume intérieur dudit récipient de cuisson, et étant amovible sélectivement depuis ladite ouverture supérieure du récipient de cuisson,
**caractérisé en ce que** ledit couvercle supérieur de fermeture (3) est relié à une partie de la bordure supérieure (6) dudit récipient de fermeture par une articulation respective, et **en ce que** ledit deuxième couvercle est muni d'une deuxième articulation (10) respective fixée à la même partie.

2. Récipient de cuisson selon la revendication 1, **caractérisé en ce que** la tige d'articulation (12) est commune et les bras (14, 15) dudit couvercle supérieur de fermeture et dudit deuxième couvercle, respectivement, sont appliqués sur ladite tige d'articulation commune (12).

3. Récipient de cuisson selon la revendication 2, **caractérisé en ce que** ledit couvercle supérieur de fermeture (3) peut être ouvert sélectivement d'une manière indépendante, et **en ce que** ledit deuxième couvercle (5) est adapté pour rester dans son état fermé sur le récipient de cuisson.

4. Récipient de cuisson selon l'une quelconque des revendications précédentes, **caractérisé en ce qu'**il est muni de moyens de sécurité (13, 16) qui sont adaptés pour arrêter le fonctionnement dudit dispositif d'agitation (4) quand ledit deuxième couvercle (5) est retiré de l'ouverture supérieure dudit récipient de cuisson.
